# EUROPÄISCHE PATENTSCHRIFT

(11) **EP 3 317 162 B1**
(45) Veröffentlichungstag und Bekanntmachung des Hinweises auf die Patenterteilung: **05.06.2019**
(21) Anmeldenummer: 16729491.7
(22) Anmeldetag: 10.06.2016
(51) Int. Cl.: B62D 5/04, B62D 7/15, B62D 9/00, B62D 7/14

(54) **KRAFTFAHRZEUG FÜR EIN PILOTIERTES FAHREN MIT EINEM VORDERACHSLENKSYSTEM UND EINEM HINTERACHSLENKSYSTEM**
MOTOR VEHICLE FOR PILOTED DRIVING COMPRISING A FRONT AXLE STEERING SYSTEM AND A REAR AXLE STEERING SYSTEM
VÉHICULE AUTOMOBILE À CONDUITE PILOTÉ ÉQUIPÉ D'UN SYSTÈME DE DIRECTION D'ESSIEU AVANT ET D'UN SYSTÈME DE DIRECTION D'ESSIEU ARRIÈRE

(30) Priorität: 02.07.2015 DE 102015008587
(43) Veröffentlichungstag der Anmeldung: 09.05.2018
(73) Patentinhaber: Audi AG, 85045 Ingolstadt (DE)
(72) Erfinder: REDEKER, Michael, 85084 Reichertshofen (DE); MINNINGER, Arne, 85139 Wettstetten (DE); MÜLLER, Thomas, 85051 Ingolstadt (DE)
(86) Internationale Anmeldenummer: PCT/EP2016/000968
(87) Internationale Veröffentlichungsnummer: WO 2017/001045

(56) Entgegenhaltungen:
- EP-A2- 0 328 002
- EP-A2- 2 594 458
- EP-A2- 2 767 455
- GB-A- 2 448 471

## Beschreibung

Die Erfindung betrifft ein Kraftfahrzeug für ein pilotiertes Fahren mit einem Vorderachslenksystem.

Kraftfahrzeuge können bereits mit intelligenten Fahrerassistenzsystemen für ein pilotiertes Fahren im Straßenverkehr ausgerüstet werden. Beim pilotierten Fahren wird es dem Fahrzeugführer ermöglicht, vorübergehend nicht am Verkehrsgeschehen teilnehmen zu müssen und die Fahraufgaben, insbesondere Beschleunigen, Verzögern und Lenken werden automatisiert ausgeführt. Im aktivierten störungsfreien Fahrzustand "pilotiertes Fahren" wird somit die Fahraufgabe "Lenken der Vorderachse" durch eine das Vorderachslenksystem automatisch steuernde Vorderachs-Lenksteuerung als elektrisches Servo-Lenksystem (EPS-System) ausgeführt. Bei einem Ausfall dieses Lenksystems muss aus Sicherheitsgründen die Fahraufgabe "Lenken" für einen definierten Übergangszeitraum von redundanten Systemen übernommen werden.

Dazu ist bereits ein gattungsgemäßes Kraftfahrzeug bekannt (GB 2 448 471 A) mit einem Vorderachslenksystem und einem Hinterachslenksystem. Wird hier mit einer Ausfallerkennungseinrichtung ein Ausfall des Vorderachslenksystems erkannt, wird die Fahrzeuglenkung vom Hinterachslenksystem übernommen. Konkret erfolgt hier dazu eine direkte Kopplung der Vorderachslenkung mit der Hinterachslenkung mittels einer schaltbaren Kupplung. Dadurch übernimmt ein Aktor der Hinterachslenkung als Stellglied auch die Vorderachslenkung.

Zudem ist ein Kraftfahrzeug mit lenkbaren Vorderrädern und einer Lenkfunktion an den Hinterrädern bekannt (EP 1 529 718 A1) mit einem System zum Aufbau eines Gegengiermoments zur Stabilisierung des Kraftfahrzeugs anhand eines radindividuellen Bremsdrucks und Reduzierung eines Schwimmwinkels anhand der Lenkfunktion an den Hinterrädern. Das System arbeitet unabhängig von einem Ausfall der Vorderachslenkung.

Weiter ist ein Fahrzeug bekannt (DE 10 2012 207 548 A1), bei dem im Bedarfsfall die Möglichkeit besteht, eine Fahrzeug-Gierbewegung durch gezielte, radselektive Bremseingriffe einzuleiten.

Es ist somit bereits mehrfach bekannt, bei einem Ausfall der Vorderachs-Lenksteuerung die Lenkaufgabe vom Hinterachslenksystem übernehmen zu lassen. Im Versuch hat sich jedoch gezeigt, dass das alleinige Einregeln eines Hinterachslenkungsradwinkels, insbesondere bei schneller fahrenden Straßenfahrzeugen zur Realisierung der Lenkaufgabe bei ausgefallenem Vorderachslenksystem nicht ausreicht, um das Fahrzeug zu manövrieren und die Fahrtrichtung entscheidend zu beeinflussen. Es stellt sich lediglich ein Schwimmwinkel ein und das Fahrzeug fährt im Wesentlichen geradeaus weiter. Das Dokument GB 2 448 471 A ist als nächstliegender Stand der Technik nach dem Oberbegriff des Anspruchs 1 zu sehen.

Aufgabe der Erfindung ist es daher, ein gattungsgemäßes Kraftfahrzeug so weiterzubilden, dass eine funktionsfähige Manövrierung eines Fahrzeugs beim pilotierten Fahren und einem Ausfall der Vorderachslenksteuerung mit dem Hinterachslenksystem möglich ist.

Diese Aufgabe wird dadurch gelöst, dass bei ausgefallener automatischer Vorderachs-Lenksteuerung mit einer Vorrichtung für gesteuerte radselektive Bremseingriffe eine automatische Mittenzentrierung des Vorderachslenksystems entsprechend einer Geradeausstellung der Vorderräder ohne Vorderradlenkwinkeleinschlagmittels radselektiver Bremseingriffe durchgeführt wird. Die radselektiven Bremseingriffe dienen dazu, die Reifenseitenkraft die aufgrund des Fahrzeugschwimmwinkels entsteht, zu kompensieren, wodurch dann das Fahrzeug mit Hilfe des Lenksystems an der Hinterachse manövriert werden kann.

Konkret wird für die Manövrierung des Fahrzeugs für einen definierten Übergangszeitraum bei ausgefallener automatischer Vorderachs-Lenksteuerung und ohne eingebrachtes Handmoment ein vorgegebener Hinterachslenkungsradwinkel eingeregelt. Zudem wird eine aktive, schwimmwinkelunabhängige Mittenzentrierung des Vorderachslenksystems durch radselektive Bremseingriffe an der Vorderachse durchgeführt zur Kompensierung der Reifenseitenkräfte, die aufgrund des Schwimmwinkels als Winkel zwischen der Bewegungsrichtung und der Fahrzeuglängsachse entstehen. Erst durch eine solche kompensierende Kraftkomponente am Einzelrad wird es möglich, das Fahrzeug mittels des Lenksystems an der Hinterachse zu manövrieren.

In einem störungsfreien, pilotierten Fahrzustand kann eine aktive Mittenzentrierung des Vorderachslenksystems mittels eines Aktors erfolgen, der einen Elektromotor als Stellmotor aufweisen kann. Insbesondere kann hier ein Ausfall des Elektromotors und der Steuerung überwacht werden. Eine solche Überwachung kann unmittelbar durch Sensoren am Aktor und/oder gegebenenfalls mehrfach redundant indirekt dadurch überwacht werden, dass ein vorgegebener Soll-Lenkwinkel nicht eingeregelt oder gehalten werden kann.

Für die Steuerung/Regelung der aktiven Mittenzentrierung insbesondere auch in Verbindung mit den radselektiven Bremseingriffen können die Messwerte eines Vorderachs-Lenkwinkelsensors, insbesondere eines Lenkradwinkelgebers als Istwert-Geber ausgewertet werden.

Weiter wird vorgeschlagen, dass für die redundante Übernahme der Lenkaufgabe bei ausgefallener automatischer Vorderachs-Lenksteuerung durch das Hinterachslenksystem in Verbindung mit der aktiven Mittenzentrierung des Vorderachslenksystems ein definierter Übergangszeitraum vorgegeben wird, in dem das Fahrzeug selbsttätig in ein Fahrbahn-Seitenaus steuert und gegebenenfalls abbremst und anhält.

Anhand einer Zeichnung wird die Erfindung weiter erläutert.

Es zeigen:
- Fig. 1: eine Schemadarstellung eines Fahrzeugs für ein pilotiertes Fahren mit einem Vorderachs- und einem Hinterachslenksystem; und
- Fig. 2: beispielhaft ein Flussdiagramm, in dem die einzelnen Prozessschritte angegeben sind.

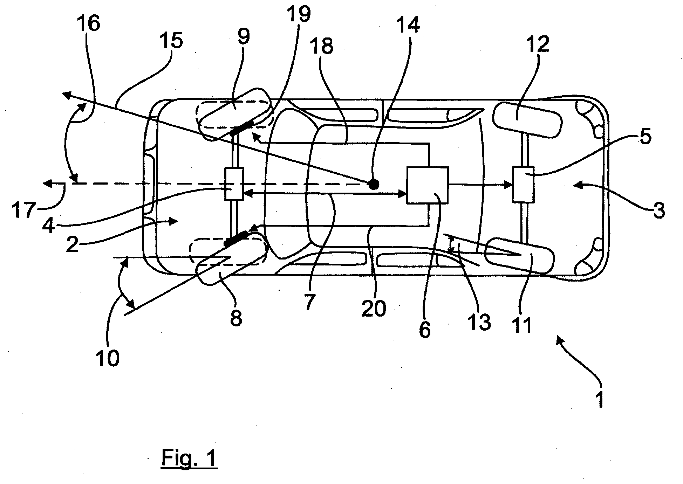

In Fig. 1 ist schematisch eine Draufsicht auf eine Kraftfahrzeug 1 dargestellt, welches für ein pilotiertes Fahren ausgerüstet ist und ein Vorderachslenksystem 2 und Hinterachslenksystem 3 aufweist.

Das Vorderachslenksystem 2 weist einen Vorderachsstellmotor 4 und das Hinterachslenksystem 3 einen Hinterachsstellmotor 5 auf.

Das Kraftfahrzeug 1 enthält zudem eine (schematisch angedeutete) Steuereinrichtung 6, mit der beim pilotierten Fahren (ohne Handmoment) über eine Vorderachssteuerleitung 7 durch Ansteuerung des VorderachsStellmotors 4 automatisch eine Vorderachs-Lenksteuerung durchgeführt wird, wobei in Fig. 1 das linke Vorderrad 8 und das rechte Vorderrad 9 jeweils mit einem Vorderachslenkungsradwinkel 10 eingeschlagen sind. Entsprechend sind aktuell die Hinterräder 11, 12 mittels des Hinterachs-Stellmotors 5 in einem Hinterachslenkungsradwinkel 13 eingeschlagen. Durch die damit vorgegebene Fahrt in einer Linkskurve ergibt sich eine aktuelle Bewegungsrichtung des Fahrzeugzentrums 14 entsprechend dem Pfeil 15 sowie ein Schwimmwinkel 16 zwischen der Fahrzeuglängsachse 17 und der aktuellen Bewegungsrichtung entsprechend Pfeil 15.

Der Vorderachs-Stellmotor 4 enthält beispielhaft eine Ausfallerkennungsrichtung, mit der ein Ausfall des Vorderachsstellmotors 4 und damit auch der Vorderachslenksteuerung des Vorderachslenksystems 2 erkannt und über die Vorderachssteuerleitung 7 der Steuereinrichtung 6 mitgeteilt wird. Für diesen Fall wird das Hinterachslenksystem 3 von der Steuereinrichtung 6 so gesteuert, dass es die Lenkaufgabe für das Kraftfahrzeug 1 übernimmt.

In diesem Fall wird zudem von der Steuereinrichtung 6 eine automatische Mittenzentrierung des Vorderachslenksystems 2 mittels radselektiver Bremseingriffe durchgeführt, um die Vorderräder 8, 9 in eine Geradeausstellung ohne einen Vorderradlenkwinkeleinschlag zu stellen und zu halten, wie dies strichliert für die Vorderräder 8, 9 eingezeichnet ist. Dazu wird in der aktuell dargestellten Fahrsituation von der Steuereinrichtung 6 über eine Bremssteuerleitung 18 die Bremse 19 des rechten Vorderrads 9 radselektiv angebremst, um die erforderliche Mittenzentrierung zu erhalten, ohne die das Hinterachslenksystem 3 bei ausgefallenen Vorderachslenksystem 2 die Fahraufgabe nicht zielführend übernehmen kann. Bei einem beispielsweise durch einen (nicht dargestellten) Vorderachs-Lenkwinkelsensor erkannten Vorderradlenkungsradwinkel in die andere Richtung wird für eine automatische Mittenzentrierung über eine Bremssteuerleitung 20 das Vorderrad 9 radselektiv angebremst.

Zur Verdeutlichung der Erfindung sind in Fig. 1 Bauteile, Funktionselemente und Steuerleitungen als Einzelkomponenten dargestellt. Zum Teil sind diese Einzelkomponenten in modernen Fahrzeugen gegebenenfalls mit anderen Funktionen in übergeordneten Steuer- und Regeleinheiten integriert, bzw. integrierbar, wobei Steuerungssignale, insbesondere auch über Bussysteme geleitet werden. Auch diese Ausführungsformen sollen von der Erfindung mit umfasst sein.

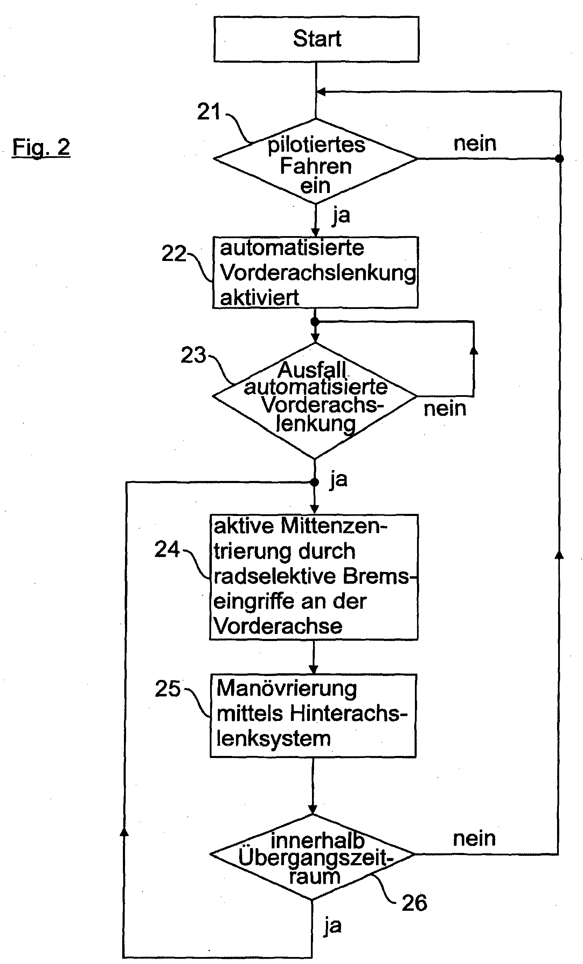

Entsprechend dem Flussdiagramm nach Fig. 2 wird nach dem Start in der Entscheidungsraute 21 festgestellt, ob der Fahrzeugführer das Fahrerassistenzsystem "pilotiertes Fahren" aktiviert hat.

Im Falle der Aktivierung wird gemäß Statusrechteck 22 in Verbindung mit weiteren Maßnahmen auch die automatisierte Vorderachslenkung aktiviert.

In der Entscheidungsraute 23 wird ständig überprüft, ob die automatisierte Vorderachslenkung ausgefallen ist.

Wenn ein Ausfall festgestellt wird, erfolgt gemäß dem Statusrechteck 24 die aktive Mittenzentrierung der Vorderachslenkung durch radselektive Bremseingriffe an der Vorderachse. Zudem wird gemäß Statusrechteck 25 das Fahrzeug mittels des Hinterachslenksystems manövriert.

In der Entscheidungsraute 26 wird überprüft, ob die Manövrierung mittels des Hinterachslenksystems in Verbindung mit der aktiven Mittenzentrierung innerhalb eines vorgegebenen Übergangzeitraums liegt, in dem insbesondere das Fahrzeug auf einen Fahrbahn-Seitenstreifen manövriert und angehalten wird. Je nach internem Fahrzeugdiagnosesystem und vorgegebener Sicherheitsstrategie kann dann dem Fahrer signalisiert und/oder die Steuerung so ausgelegt werden, dass von Hand weitergefahren werden kann oder das Fahrzeug nicht mehr fahrfähig ist.

## Patentansprüche

1. Kraftfahrzeug für ein pilotiertes Fahren mit einem Vorderachslenksystem und einem Hinterachslenksystem,
wobei im aktivierten, störungsfreien Fahrzustand bei einem pilotierten Fahren die Fahraufgabe zum Lenken der Vorderachse durch eine das Vorderachslenksystem automatisch steuernde Vorderachs-Lenksteuerung ausgeführt wird, und
mit einer Ausfallerkennungseinrichtung ein Ausfall der automatischen Vorderachs-Lenksteuerung selbsttätig erkannt wird und die FahrzeugLenkung vom Hinterachslenksystem übernommen wird. **dadurch gekennzeichnet,**
**dass** das Kraftfahrzeug mit einer Vorrichtung für gesteuerte radselektive Bremseingriffe ausgerüstet ist und dass diese Vorrichtung bei ausgefallener, automatischer Vorderachs-Lenksteuerung so gesteuert wird, dass eine automatische Mittenzentrierung des Vorderachslenksystems mittels radselektiver Bremseingriffe durchgeführt wird.

2. Kraftfahrzeug nach Anspruch 1, **dadurch gekennzeichnet, dass** für die Manövrierung des Fahrzeugs für einen definierten Übergangszeitraum bei ausgefallener automatischer Vorderachs-Lenksteuerung und ohne eingebrachtes Handmoment ein vorgegebener Hinterachslenkungsradwinkel eingeregelt wird, und dass eine aktive schwimmwinkelunabhängige Mittenzentrierung des Vorderachslenksystems durch radselektive Bremseingriffe an der Vorderachse durchgeführt wird, um Reifenseitenkräfte zu kompensieren, die aufgrund eines Schwimmwinkels als Winkel zwischen der Bewegungsrichtung und der Fahrzeuglängsachse entstehen.

3. Kraftfahrzeug nach Anspruch 1 oder Anspruch 2, **dadurch gekennzeichnet, dass** im störungsfreien, pilotierten Fahrzustand eine aktive Mittenzentrierung des Vorderachslenksystems mittels eines Elektromotors als Stellmotor erfolgt und insbesondere ein Ausfall dieses Elektromotors und seiner Steuerung mittels der Ausfallerkennungseinrichtung überwacht wird.

4. Kraftfahrzeug nach einem der Ansprüche 1 bis 3, **dadurch gekennzeichnet, dass** für die Steuerung/Regelung der aktiven Mittenzentrierung die Messwerte eines Vorderachs-Lenkwinkelsensors als Istwert-Geber ausgewertet werden.

5. Kraftfahrzeug nach einem der Ansprüche 1 bis 4, **dadurch gekennzeichnet, dass** für die redundante Übernahme der Lenkaufgabe bei ausgefallener automatischer Vorderachs-Lenksteuerung durch das Hinterachslenksystem in Verbindung mit der aktiven Mittenzentrierung des Vorderachslenksystems ein definierter Übergangszeitraum vorgegeben wird, in dem das Fahrzeug selbsttätig in ein Fahrbahn-Seitenaus steuert und gegebenenfalls abbremst und anhält.

## Claims

1. Motor vehicle for piloted driving with a front axle steering system and a rear axle steering system, wherein in the activated, error-free driving state during piloted driving, the driving task for steering the front axle is carried out by a front axle steering control system which automatically controls the front axle steering system,
and wherein a failure detection device automatically detects a failure of the automatic front axle steering control system and the vehicle steering is taken over by the rear axle steering system,
**characterised in that**
the motor vehicle is equipped with a device for controlled wheel-selective brake interventions and **in that** this device is controlled in the event of failure of automatic front axle steering control in such a way that automatic centring of the front axle steering system is carried out by means of wheel-selective brake interventions.

2. Motor vehicle according to Claim 1, **characterised in that** a predetermined rear axle steering wheel angle is adjusted for the manoeuvring of the vehicle for a defined transition period in the event of the failure of the automatic front axle steering control and without any applied manual torque, and **in that** an active centring of the front axle steering system, independent of the side slip angle, is carried out by wheel-selective brake interventions on the front axle in order to compensate for lateral tyre forces which arise as a result of a side slip angle as an angle between the direction of movement and the longitudinal axis of the vehicle.

3. Motor vehicle according to claim 1 or 2, **characterised in that**, in the error-free, piloted driving state, the front axle steering system is actively centred by means of an electric motor as a servomotor and, in particular, that failure of this electric motor and of its control system is monitored by means of the failure detection device.

4. Motor vehicle according to any one of claims 1 to 3, **characterised in that** the measured values of a front axle steering angle sensor are evaluated as actual value transmitters for the control/regulation of the active centring.

5. Motor vehicle according to any one of claims 1 to 4, **characterised in that** a defined transition period is predetermined for the redundant assumption of the steering task by the rear axle steering system in conjunction with the active centring of the front axle steering system in the event of failure of the automatic front axle steering control system, in which transition period the vehicle automatically steers into the road shoulder and, if appropriate, brakes and stops.

## Revendications

1. Véhicule automobile pour une conduite pilotée avec un système de direction d'essieu avant et un système de direction d'essieu arrière, dans lequel dans l'état de conduite non perturbé activé en conduite pilotée la tâche de conduite est réalisée pour la direction de l'essieu avant par une commande de direction d'essieu avant commandant automatiquement le système de direction d'essieu avant, et
avec un dispositif de reconnaissance de défaillance une défaillance de la commande de direction d'essieu avant automatique est automatiquement détectée et la direction du véhicule est entreprise par le système de direction d'essieu arrière,
**caractérisé en ce**
**que** le véhicule automobile est équipé d'un dispositif pour des freinages sélectifs de roue commandés et que ce dispositif est commandé en cas de commande de direction d'essieu avant automatique défaillante de sorte qu'un centrage médian automatique du système de direction d'essieu avant soit réalisé au moyen de freinages sélectifs de roue.

2. Véhicule automobile selon la revendication 1, **caractérisé en ce que** pour la manoeuvre du véhicule pour une période de transition définie en cas de commande de direction d'essieu avant automatique défaillante et sans couple manuel introduit un angle de roue de direction d'essieu arrière prescrit est réglé, et qu'un centrage médian indépendant de l'angle de dérapage actif du système de direction d'essieu avant est réalisé par des freinages sélectifs de roue sur l'essieu avant afin de compenser des forces latérales de pneu qui apparaissent en raison d'un angle de dérapage en tant qu'angle entre le sens de déplacement et l'axe longitudinal du véhicule.

3. Véhicule automobile selon la revendication 1 ou la revendication 2, **caractérisé en ce que** dans l'état de conduite piloté non perturbé un centrage médian actif du système de direction d'essieu avant est effectué au moyen d'un moteur électrique en tant que moteur de réglage et en particulier une défaillance de ce moteur électrique et sa commande sont surveillées au moyen du dispositif de reconnaissance de défaillance.

4. Véhicule automobile selon l'une quelconque des revendications 1 à 3, **caractérisé en ce que** pour la commande/la régulation du centrage médian actif les valeurs de mesure d'un capteur d'angle de direction d'essieu avant en tant que transmetteur de valeur réelle sont évaluées.

5. Véhicule automobile selon l'une quelconque des revendications 1 à 4, **caractérisé en ce que** pour la reprise redondante de la tâche de direction en cas de commande de direction d'essieu avant automatique défaillante, une période de transition définie est prescrite par le système de direction d'essieu arrière en liaison avec le centrage médian actif du système de direction d'essieu avant, dans laquelle le véhicule commande automatiquement dans un côté de chaussée et freine et s'arrête éventuellement.
